# EUROPEAN PATENT APPLICATION

(11) **EP 1 677 491 A2**
(43) Date of publication of application: **05.07.2006**
(21) Application number: 05028654.1
(22) Date of filing: 29.12.2005
(51) Int. Cl.: H04L 29/12, H04L 29/08

(54) **Method for assigning internet protocol (IP) address to wireless terminal incapable of accessing mobile communication network, and mobile communication terminal capable of implementing the same**

(30) Priority: 30.12.2004 KR 2004116697
(71) Applicant: LG Electronics Inc., Yongdungpo-gu Seoul (KR)
(72) Inventor: Kim, Woo Seong, Gwangmyeong-si Gyeonggi-do (KR)
(74) Representative: Katérle, Axel

(57) **Abstract**

A method and mobile communication terminal for assigning an IP address are discussed. In one embodiment, the mobile communication terminal includes a mobile network interface configured to access a Dynamic Host Configuration Protocol (DHCP) server over the mobile communication network, and to download a DHCP server software program from the DHCP server, so that the mobile communication terminal can serve as a pseudo-DHCP server for at least one wireless terminal capable of accessing the mobile communication terminal.

## Description

Method for assigning internet protocol (IP) address to wireless terminal incapable of accessing mobile communication network, and mobile communication terminal capable of implementing the same

This application claims, under 35 U.S.C. §119, the priority benefit of Korean Patent Application No. 10-2004-0116697, filed on December 30, 2004 in Korea, which is hereby incorporated by reference as if fully set forth herein.

### BACKGROUND OF THE INVENTION

### Field of the Invention

The present invention relates to a method for providing a wireless terminal with an Internet service. More particularly, the invention relates to a method for assigning an Internet Protocol (IP) address to a wireless terminal capable of accessing a mobile communication terminal but incapable of directly accessing a mobile communication network, and to the mobile communication terminal for performing the IP address assignment method.

### Discussion of the Related Art

Conventional wireless terminals such as Personal Digital Assistants (PDAs) can communicate with each other via a Bluetooth or a Wireless Local Area Network (WLAN), but they are unable to access a mobile communication network such as a Code Division Multiple Access (CDMA) network. As a result, the above-mentioned conventional wireless terminals are unable to access the Internet indicative of a representative communication network. Typically, if a user terminal desires to wirelessly access the Internet, the terminal must enter an additional hot-spot area including an Access Point (AP) for the aforementioned wireless terminals. In other words, in order to enable the wireless terminal to wirelessly access the Internet, the wireless terminal must enter the hot-spot area, must gain access to a Dynamic Host Configuration Protocol (DHCP) server via the AP contained in the hot-spot area over the WLAN, and must receive an Internet Protocol (IP) address from the DHCP server, such that it can wirelessly access the Internet within the hot-spot area only. This results in greater inconvenience of use.

In the meantime, wireless communication between the above-mentioned conventional wireless terminals in other areas other than the hot-spot area can be established in an Adhoc mode on the condition that IP addresses of the wireless terminals are established according to a zero configuration method. The Adhoc mode is indicative of a communication mode between terminals instead of a communication mode between a base station and terminals. In the Adhoc mode, terminals widely spaced apart from each other can communicate with each other because an intermediate terminal located between the above terminals serves as a repeater, and this communication method is generally referred to as a multi-hop access.

In order to implement the above-mentioned Adhoc-mode communication, a terminal firstly establishes a single IP address, broadcasts the established IP address to peripheral terminals, and determines whether the established IP address collides with IP addresses of the peripheral terminals. If there is no IP address collision, the terminal uses the established IP address as its own IP address. Otherwise, if the occurrence of IP address collision is determined, the terminal establishes another IP address (i.e., a second IP address), broadcasts the second IP address to peripheral terminals, and determines whether the second IP address collides with IP addresses of the peripheral terminals. The above-mentioned terminal operations are referred to as a Duplicated Address Detection (DAD) task. The DAD task is repeated until a predetermined IP address having no IP address collision is established, and this IP address assignment method is referred to as a zero-configuration method.

However, since the IP address established by the zero-configuration method for use in wireless terminals is not a public IP address, it is impossible for a wireless terminal to access the Internet via the established IP address according to the multi-hop access method. In addition, the IP address assignment method according to the zero-configuration method for use in wireless terminal must be repeatedly performed until a predetermined IP address having no IP address collision is established, such that a long period of time is consumed to perform an IP address setup process when a large number of peripheral terminals are used.

### SUMMARY OF THE INVENTION

Accordingly, the present invention is directed to a method for assigning an IP address to a wireless terminal incapable of accessing a mobile communication network, and a mobile communication terminal capable of implementing the same that substantially obviate one or more problems due to limitations and disadvantages of the related art.

An object of the present invention is to provide a method for assigning an IP address to at least one wireless terminal capable of accessing a mobile communication terminal but incapable of accessing a mobile communication network, and to the mobile communication terminal for performing the IP address assignment method.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to an embodiment a method for assigning an Internet Protocol (IP) address to a wireless terminal using a mobile communication terminal, the method comprising accessing, by the mobile communication terminal, a Dynamic Host Configuration Protocol (DHCP) server over a mobile communication network; downloading, by the mobile communication terminal, a DHCP software program from the DHCP server; and performing, by the mobile communication terminal, a pseudo-DHCP server function using the downloaded DHCP server software program in association with at least one wireless terminal capable of wirelessly accessing the mobile communication terminal.

In another aspect of the present invention, there is provided a mobile communication terminal comprising a mobile communication interface unit for accessing a mobile communication network, an adhoc interface unit for wirelessly accessing at least one wireless terminal, and a controller for controlling the mobile network interface unit and the adhoc interface unit, wherein the mobile communication terminal accesses a Dynamic Host Configuration Protocol (DHCP) server over the mobile communication network, downloads a DHCP server software program from the DHCP server, and serves as a pseudo-DHCP server for at least one wireless terminal capable of accessing the mobile communication terminal.

According to another aspect of the present invention, there is provided a mobile communication terminal comprising a mobile network interface configured to access a Dynamic Host Configuration Protocol (DHCP) server over a mobile communication network, and to download a DHCP server software program from the DHCP server, so that the mobile communication terminal can serve as a pseudo-DHCP server for at least one wireless terminal capable of accessing the mobile communication terminal.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram illustrating a mobile communication terminal according to an embodiment of the present invention;
FIG. 2 is a structural diagram illustrating a network for providing a wireless terminal with an Internet service using the mobile communication terminal of FIG. 1 according to an embodiment of the present invention; and
FIG. 3 is a flow chart illustrating a method for constructing an IP address of a wireless terminal using the mobile communication terminal of FIG. 1 according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

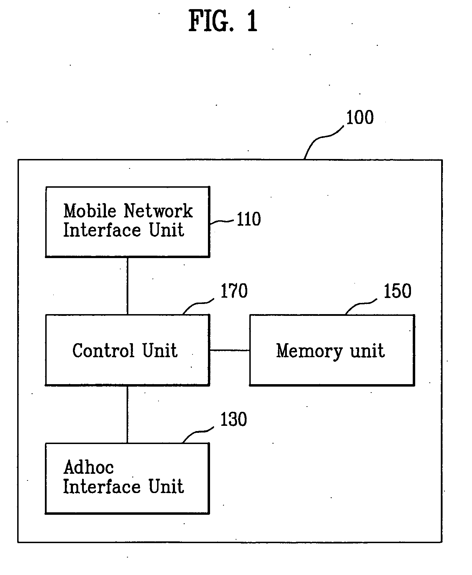

A mobile communication terminal 100 according to an embodiment of the present invention will hereinafter be described with reference to FIG. 1. FIG. 1 is a block diagram illustrating a mobile communication terminal according to the present invention.

Referring to FIG. 1, the mobile communication terminal 100 (e.g., a cellular phone) includes a mobile network interface unit 110, an Adhoc interface unit 130, a memory unit 150, and a controller 170, all operatively coupled. The mobile network interface unit 110 allows the mobile communication terminal 100 to access a mobile communication network such as a CDMA network. The Adhoc interface unit 130 (e.g., a WLAN or Bluetooth interface unit) allows the mobile communication terminal 100 to wirelessly communicate with at least one wireless terminal (e.g., a PDA). The memory unit 150 stores a variety of software programs (e.g., DHCP server software and NAT (Network Address Translation) software) required for assigning an IP address to at least one wireless terminal. The controller 170 controls overall components of the mobile communication terminal 100.

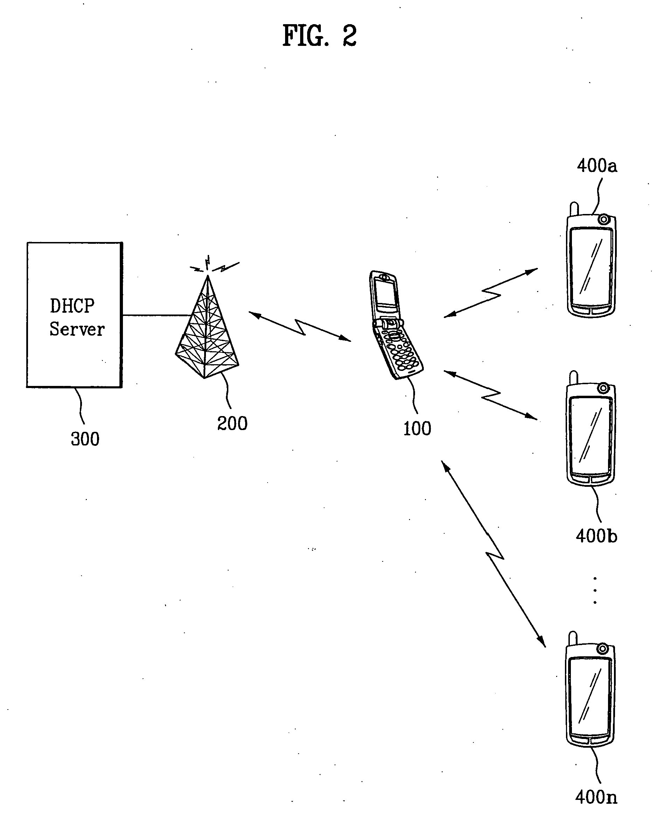

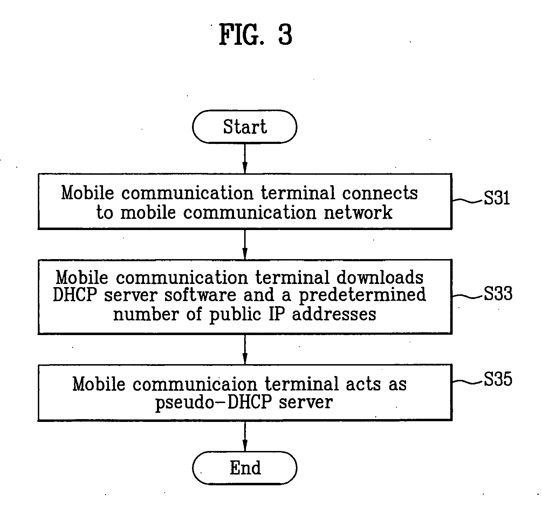

A detailed IP address assignment method for use in a wireless terminal using the above-mentioned mobile communication terminal 100 will hereinafter be described with reference to FIGS. 2-3. However, this method can be implemented in other suitable device/system.

Referring to FIGS. 2-3, the mobile communication terminal 100 gains access to a mobile communication network 200, and gains access to a DHCP server 300 over the mobile communication network 200 at step S31. Preferably, the aforementioned access by the mobile communication terminal 100 may be executed via an Open Shortest Path First (OSPF) protocol or a Routing Information (RI) protocol.

The mobile communication terminal 100 (e.g., using the mobile network interface unit 110) downloads a DHCP server software program from the DHCP server 300 for allowing the mobile communication terminal 100 to serve as a Pseudo-DHCP server, and stores the downloaded software program in the memory unit 150 (or other suitable storage) at step S33. The mobile communication terminal 100 also receives a predetermined number of public IP addresses from the DHCP server 300 via the network 200.

Thereafter, the mobile communication terminal 100 serves as a Pseudo-DHCP server for one or more wireless terminals (400a, 400b, ... , 400n) capable of wirelessly accessing and communicating with the mobile communication terminal 100, using the downloaded DHCP server software program at step S35. The wireless terminal 400a, 400b,..., 400n can be PDAs or other devices capable of communicating with the mobile communication terminal 100 but incapable of directly accessing the Internet or the like. Any number of wireless terminals are applicable.

In other words, the mobile communication terminal 100 assigns the received public IP addresses to the above-mentioned wireless terminals (400a, 400b,..., or 400n). For instance, each wireless terminal 400a, 400b..., 400n can be assigned with one public IP address. Therefore, the wireless terminals (400a, 400b, ... , 400n) can access the Internet via the mobile communication terminal 100 serving as the pseudo-DHCP server using the assigned public IP addresses. In addition, the wireless terminals (400a, 400b, ... , 400n) can communicate with each other in the Adhoc mode using the above-mentioned assigned public IP addresses. Preferably, the Adhoc-mode communication may be executed using an AODV (Ad hoc On-Demand Distance Vector) protocol.

If one (e.g., 400a) of the above wireless terminals (400a, 400b, ... , 400n) is disconnected from the mobile communication terminal 100, the mobile communication terminal 100 withdraws the assigned public IP address from that wireless terminal 400a. In other words, the disconnected wireless terminal is longer assigned to a public IP address.

According to the above-mentioned preferred embodiments of the present invention, only a predetermined number of wireless terminals corresponding to the number of public IP addresses obtained from the DHCP server can receive IP addresses from the mobile communication terminal. However, if the mobile communication terminal further downloads a Network Address Translation (NAT) software program from the DHCP server, the mobile communication terminal can assign IP addresses to a larger number of wireless terminals than the number of the public IP addresses received from the DHCP server, and a detailed description thereof will hereinafter be described.

In one embodiment, the mobile communication terminal 100 generates any number of private IP addresses (e.g., larger than the number of the public IP addresses received from the DHCP server), and assigns the private IP addresses to wireless terminals (400a, 400b, ... , 400n), such that the wireless terminals (400a, 400b, ..., 400n) can communicate with each other in an Adhoc mode. However, it is unusual for all the wireless terminals (400a, 400b, ... , 400n) receiving private IP addresses from the mobile communication terminal 100 to simultaneously desire to access the Internet. Therefore, the NAT software program in the mobile communication terminal 100 converts/maps the assigned private IP address(es) of only the wireless terminal(s), which access the mobile communication terminal 100 to access the Internet, to the public IP address(es). Therefore, the mobile communication terminal 100 can assign many more wireless terminals than the number of the public IP addresses received from the DHCP server, by using the private IP addresses and selectively assigning the public IP addresses as needed for the Internet access.

In one embodiment, if the mobile communication terminal 100 stops the pseudo-DHCP server function as a result of unavoidable circumstances (e.g., separation from the mobile communication network), the mobile communication terminal 100 transfers software programs and IP pool information for the pseudo-DHCP server function to a third-party mobile communication terminal, such that the third-party mobile communication terminal can continuously perform the pseudo-DHCP server function.

As apparent from the above description, the present invention allows a wireless terminal incapable of directly accessing a mobile communication network to access the Internet over the mobile communication terminal even at a place spaced apart from a hot-spot area, and does not use the zero-configuration method when establishing IP addresses of a plurality of wireless terminals, such that a time consumed for establishing the IP addresses is greatly reduced.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for assigning an Internet Protocol (IP) address to a wireless terminal using a mobile communication terminal, the method comprising:
accessing, by the mobile communication terminal, a Dynamic Host Configuration Protocol (DHCP) server over a mobile communication network;
downloading, by the mobile communication terminal, a DHCP software program from the DHCP server; and
performing, by the mobile communication terminal, a pseudo-DHCP server function using the downloaded DHCP server software program in association with at least one wireless terminal capable of wirelessly accessing the mobile communication terminal.

2. The method according to claim 1, wherein the downloading step further includes:
receiving, by the mobile communication terminal, a predetermined number of public IP addresses from the DHCP server.

3. The method according to claim 2, wherein the performing step includes:
if the at least one wireless terminal wirelessly accesses the mobile communication terminal, assigning by the mobile communication terminal at lest one of the received public IP addresses to the at lest one wireless terminal.

4. The method according to claim 3, wherein the performing step further includes:
if one of the at least one wireless terminal is disconnected from the mobile communication terminal, withdrawing by the mobile communication terminal the assignment of the public IP address from the disconnected wireless terminal.

5. The method according to claim 1, wherein the at least one wireless terminal wirelessly accesses the mobile communication terminal in an Adhoc mode.

6. The method according to claim 1, wherein the mobile communication terminal is a cellular phone.

7. The method according to claim 6, wherein the at least one wireless terminal is at least one Personal Digital Assistant (PDA).

8. The method according to claim 2, wherein the downloading step further includes:
downloading, by the mobile communication terminal, a Network Address Translation (NAT) software program from the DHCP server.

9. The method according to claim 8, wherein the performing step further includes:
if one of the at least one wireless terminal wirelessly accesses the mobile communication terminal, generating by the mobile communication terminal a private IP address, and assigning the private IP address to the one wireless terminal.

10. The method according to claim 9, wherein the performing step further includes:
if the one wireless terminal desires to access an Internet service using the private IP address assigned by the mobile communication terminal, converting by the mobile communication terminal the assigned private IP address into one of the received public IP addresses using the NAT software program.

11. The method according to claim 10, wherein the performing step further includes:
if the one wireless terminal is disconnected from the mobile communication terminal, withdrawing by the mobile communication terminal the assignment of the converted public IP address from the one wireless terminal.

12. A mobile communication terminal comprising:
a mobile network interface unit for accessing a mobile communication network;
an adhoc interface unit for wirelessly accessing at least one wireless terminal; and
a controller for controlling the mobile network interface unit and the adhoc interface unit,
wherein the mobile communication terminal accesses a Dynamic Host Configuration Protocol (DHCP) server over the mobile communication network, downloads a DHCP server software program from the DHCP server, and serves as a pseudo-DHCP server for the at least one wireless terminal capable of accessing the mobile communication terminal.

13. The mobile communication terminal according to claim 12, wherein the mobile communication terminal also receives a predetermined number of public IP addresses from the DHCP server over the mobile communication network.

14. The mobile communication terminal according to claim 13, wherein if the at least one wireless terminal wirelessly accesses the mobile communication terminal, the mobile communication terminal assigns at least one of the received public IP addresses to the at least one wireless terminal.

15. The mobile communication terminal according to claim 14, wherein if one of the at least one wireless terminal is disconnected from the mobile communication terminal, the mobile communication terminal withdraws the assignment of the public IP address from the disconnected wireless terminal.

16. The mobile communication terminal according to claim 12, wherein the adhoc interface unit allows the at least one wireless terminal to wirelessly access the mobile communication terminal in an adhoc mode.

17. The mobile communication terminal according to claim 12, wherein the mobile communication terminal is a cellular phone.

18. The mobile communication terminal according to claim 17, wherein the mobile communication terminal serves as the pseudo-DHCP server to the at least one wireless terminal being at least one Personal Digital Assistant (PDA).

19. The mobile communication terminal according to claim 13, wherein the mobile communication terminal further downloads a Network Address Translation (NAT) software program from the DHCP server.

20. The mobile communication terminal according to claim 19, wherein if one of the at least one wireless terminal wirelessly accesses the mobile communication terminal, the mobile communication terminal generates a private IP address, and assigns the private IP address to the one wireless terminal.

21. The mobile communication terminal according to claim 20, wherein if the one wireless terminal desires to access an Internet service using the private IP address assigned by the mobile communication terminal, the mobile communication terminal converts the assigned private IP address into one of the received public IP addresses using the NAT software program.

22. The mobile communication terminal according to claim 21, wherein if the one wireless terminal is disconnected from the mobile communication terminal, the mobile communication terminal withdraws the assignment of the converted public IP address from the disconnected wireless terminal.

23. A mobile communication terminal comprising:
a mobile network interface configured to access a Dynamic Host Configuration Protocol (DHCP) server over a mobile communication network, and to download a DHCP server software program from the DHCP server, so that the mobile communication terminal can serve as a pseudo-DHCP server for at least one wireless terminal capable of accessing the mobile communication terminal.

24. The mobile communication terminal according to claim 23, wherein the mobile communication terminal receives a predetermined number of public IP addresses from the DHCP server over the mobile communication network; and if the at least one wireless terminal wirelessly accesses the mobile communication terminal, the mobile communication terminal assigns at least one of the received public IP addresses to the at least one wireless terminal.

25. The mobile communication terminal according to claim 24, wherein if one of the at least one wireless terminal is disconnected from the mobile communication terminal, the mobile communication terminal withdraws the assignment of public IP address from the disconnected wireless terminal.

26. The mobile communication terminal according to claim 23, wherein the mobile communication terminal is a cellular phone, and the at least one wireless terminal is at least one Personal Digital Assistant (PDA).

27. The mobile communication terminal according to claim 23, wherein the mobile communication terminal further downloads a Network Address Translation (NAT) software program from the DHCP server.

28. The mobile communication terminal according to claim 27, wherein the mobile communication terminal generates a private IP address, and selectively assigns the private IP address to one of the at least one wireless terminal.

29. The mobile communication terminal according to claim 28, wherein if the one wireless terminal desires to access an Internet service using the private IP address assigned by the mobile communication terminal, the mobile communication terminal converts the assigned private IP address of the one wireless terminal into a public IP address using the NAT software program.

30. The mobile communication terminal according to claim 29, wherein if the one wireless terminal is disconnected from the mobile communication terminal, the mobile communication terminal withdraws the assignment of the converted public IP address from the disconnected wireless terminal.
